# EUROPÄISCHE PATENTSCHRIFT

(11) **EP 2 625 008 B1**
(45) Veröffentlichungstag und Bekanntmachung des Hinweises auf die Patenterteilung: **16.03.2022**
(21) Anmeldenummer: 11773385.7
(22) Anmeldetag: 27.09.2011
(51) Int. Cl.: B25J 9/16

(54) **STEUERUNG EINES ROBOTERS**
CONTROL OF A ROBOT
COMMANDE DE ROBOT

(30) Priorität: 06.10.2010 DE 102010047641
(43) Veröffentlichungstag der Anmeldung: 14.08.2013
(73) Patentinhaber: KUKA Deutschland GmbH, 86165 Augsburg (DE)
(72) Erfinder: HOLLMANN, Stefan, 86157 Augsburg (DE)
(74) Vertreter: Schlotter, Alexander Carolus Paul
(86) Internationale Anmeldenummer: PCT/EP2011/004832
(87) Internationale Veröffentlichungsnummer: WO 2012/045403

(56) Entgegenhaltungen:
- WO-A1-2010/060574
- WO-A1-2010/063349
- DE-C2- 19 718 284

## Beschreibung

Die vorliegende Erfindung betrifft ein Verfahren und eine Vorrichtung zum Steuern eines Roboters, insbesondere eines Industrieroboters, wobei in einer Automatikbetriebsart eine Schutzüberwachung durchgeführt wird und in einer Einrichtbetriebsart eine manuelle Steuereingabe vorgesehen ist.

Beispielsweise aus der DE 197 18 284 C2 ist es bekannt, Roboter wahlweise in einer Automatikbetriebsart oder einer Einrichtbetriebsart zu betreiben.

In dieser Automatikbetriebsart ist ein Betrieb des Roboters nur möglich, wenn ein Bedienerschutz, beispielsweise eine Schutztüre, geschlossen ist - der Roboter kann dann mit voller Prozessgeschwindigkeit ein Arbeitsprogramm automatisch abarbeiten, da sichergestellt ist, dass sich keine Personen im Arbeitsbereich des Roboters befinden und durch diesen - beispielsweise infolge eigener Unachtsamkeit oder bei einer Fehlfunktion - gefährdet werden.

In der Einrichtbetriebsart, die insbesondere zum Teachen von Pose des Roboters vorgesehen ist, kann der Roboter manuell auch bei geöffnetem Bedienerschutz verfahren werden, um so beispielsweise dem Anwender eine bessere Sicht auf die Arbeitsumgebung des Roboters während des Teachens zu ermöglichen. Um trotzdem die Sicherheit zu gewährleisten, ist eine Zustimmung vorgesehen, die der Bediener aktiv betätigen muss, beispielsweise wenigstens eine Zustimmtaste. In der Einrichtbetriebsart ist ein Betrieb des Roboters nur möglich, wenn die Zustimmtaste betätigt ist - der Roboter kann dann mit reduzierter Geschwindigkeit manuell verfahren werden.

Die WO 2010/063349 A1 betrifft ein Roboterinteraktionssystem, insbesondere für Applikationen in Hütten- und Walzwerken. Dem Roboterinteraktionssystem liegt die Aufgabe zugrunde, eine Lösung zu schaffen, die eine flexiblere Anpassung eines Roboters an unterschiedliche Grade einer Mensch-Roboter-Interaktion ermöglicht. Dazu wird ein Roboter mit einer Robotersteuerung samt Mensch-Maschine-Schnittstelle vorgeschlagen, wobei Betriebsmodi für unterschiedliche Automationsgrade und/oder an unterschiedliche zeitliche und/oder örtliche Positionierungen von Mensch und Roboter angepasst sind.

Die DE 197 18 284 C2 betrifft ein Verfahren und eine Vorrichtung zum Überwachen einer Anlage mit mehreren Funktionseinheiten. Ziel ist es, eine hohe Überwachungssicherheit zu erreichen. Dazu wird jede Funktionseinrichtung der Anlage durch eine eigene Sicherheitseinrichtung individuell überprüft. Weiterhin kommunizieren die Sicherheitseinrichtungen untereinander. Die Anlage weist verschiedene sicherheitsrelevante Schnittstellen auf, insbesondere eine Aktivierung der Antriebe, einen Not-Aus und Schnittstellen zum Bedienerschutz. Weiterhin sind zwei Betriebsmodi offenbart, ein Automatikbetrieb und ein Testbetrieb.

Die WO 2010/060574 A1 betrifft eine Sicherheitssteuerung und ein Verfahren zum Steuern einer automatisierten Anlage. Aufgabe ist es, die Vermittlung derjenigen Information, die einen festgestellten Prozesszustand einer zu steuernden Anlage oder eines Systemzustandes einer Sicherheitssteuerung repräsentiert, flexibler zu gestalten, und somit die anzuzeigende Information an äußere Gegebenheiten anpassen zu können. Dazu besitzt die Steuerung neben einem Automatikbetrieb eine Vielzahl von Sonderbetrieben.

Aufgabe der vorliegenden Erfindung ist es, die Steuerung eines Roboters durch einen Bediener noch weiter zu verbessern. Zur Lösung dieser Aufgabe ist ein Verfahren nach dem Oberbegriff des Anspruchs 1 durch dessen kennzeichnende Merkmale weitergebildet. Anspruch 8 stellt eine Vorrichtung zur Durchführung eines erfindungsgemäßen Verfahrens unter Schutz,

Anspruch 9 44- ein Computerprogrammprodukt, insbesondere ein Speichermedium oder einen maschinenlesbaren Träger, auf dem ein Programm zur Durchführung eines erfindungsgemäßen Verfahrens gespeichert ist. Die Unteransprüche betreffen vorteilhafte Weiterbildungen.

Erfindungsgemäß wird neben einer Automatikbetriebsart, in der eine Schutzüberwachung durchgeführt wird, und einer Einrichtbetriebsart, in der eine manuelle Steuereingabe vorgesehen ist, noch wenigstens eine weitere Betriebsart zur Verfügung gestellt, die Funktionalitäten der beiden Betriebsarten Automatikbetrieb und Einrichtbetrieb vorteilhaft kombiniert.

In dieser Fernzugriffsbetriebsart wird, vorzugsweise in gleicher Weise wie in der Automatikbetriebsart, eine Schutzüberwachung durchgeführt. Diese kann insbesondere die Überwachung eines Arbeitsraums des Roboters umfassen. In einer bevorzugten Ausführung werden hierzu einer oder mehrere trennende Schutzeinrichtungen wie Schutzschalter überwacht, die die Verriegelung von Türen sicherstellen, die zu einem Arbeitsraum des Roboters führen und beispielsweise in einem Schutzzaun vorgesehen sind. Zusätzlich oder alternativ können auch berührungsfreie Schutzeinrichtungen wie etwa Lichtschranken, -vorhänge und dergleichen vorgesehen sein. In einer bevorzugten Weiterbildung ist wenigstes eine nicht trennende Schutzeinrichtung in Form einer optischen, elektromagnetischen, kraftsensorischen und/oder thermischen Arbeitsraumüberwachung vorgesehen, bei der beispielsweise anhand einer erfassten Wärmestrahlung, Bodenbelastung bzw. Kapazitätsänderung durch einen Menschen eine Verletzung des Arbeitsraumes erkannt wird. Bei der bevorzugten optischen Arbeitsraumüberwachung kann beispielsweise eine Bildauswertung von Bildern des Arbeitsraumes erfolgen, indem zum Beispiel eine Objekterkennung, etwa durch Überlagerung verschiedener Bilder, durchgeführt wird.

Durch die Schutzüberwachung kann vorteilhafterweise in der Fernzugriffsbetriebsart auf Zustimmeinrichtungen verzichtet werden. Dementsprechend können Bediengeräte oder Programmierwerkzeuge vereinfacht werden. Insbesondere kann in der Fernzugriffsbetriebsart ein Bediengerät, vorzugsweise ein Handbediengerät, ohne Zustimmeinrichtung verwendet werden.

In der Fernzugriffsbetriebsart sind, vorzugsweise wenigstens zum Teil in gleicher Weise wie in der Einrichtbetriebsart, eine oder mehrere manuelle Steuereingaben vorgesehen. Dabei können alle oder auch nur einige der Steuereingaben bzw. Funktionalitäten der Einrichtbetriebsart auch in der Fernzugriffsbetriebsart vorgesehen sein. Gleichermaßen können in der Fernzugriffsbetriebsart weitere, in der Einrichtbetriebsart nicht vorhandene, Funktionalitäten vorgesehen sein. Damit kann den unterschiedlichen Sicherheitskonzepten zwischen Fernzugriffsbetriebsart, die die Sicherheit bei manuellen Steuereingaben durch die Schutzüberwachung gewährleistet, und der Einrichtbetriebsart Rechnung getragen werden, die einen Betrieb des Roboters nur bei betätigter Zustimmeinrichtung ermöglicht.

In einer bevorzugt Ausführung wird in der Fernzugriffsbetriebsart, vorzugsweise in gleicher Weise wie in der Einrichtbetriebsart, ein manueller Betrieb des Roboters begrenzt. Insbesondere kann für ein manuelles Verfahren trotz der Schutzüberwachung ein Grenzwert für eine kartesische Geschwindigkeit und/oder Beschleunigung beispielsweise des TCPs und/oder für Gelenke des Roboters vorgegeben sein, die geringer ist als eine maximale Geschwindigkeit bzw. Beschleunigung, wie sie beispielsweise durch die Dynamik des Roboters vorgegeben ist.

Zusätzlich oder alternativ kann in der Fernzugriffsbetriebsart, vorzugsweise wiederum in gleicher Weise wie in der Einrichtbetriebsart, ein programmgesteuerter Betrieb des Roboters begrenzt sein. So kann beispielsweise vorgegeben werden, dass der Roboter programmierte Bahnen trotz der Schutzüberwachung nur mit reduzierter Geschwindigkeit abfährt. Auf diese Weise können insbesondere geänderte, noch nicht abgefahrene bzw. getestete Bahnen mit geringem Risiko geprüft und gegebenenfalls korrigiert werden.

In einer bevorzugten Weiterbildung ist vorgesehen, dass in der Fernzugriffsbetriebsart ein Betrieb des Roboters wahl- und/oder abschnittsweise begrenzt wird. Insbesondere kann die Begrenzung für bestimmte Abschnitte eines Arbeitsprogramms bzw. einer programmierten Bahn vorgegeben werden. Solche Abschnitte können dann zunächst mit reduzierter Geschwindigkeit abgefahren und auf diese Weise überprüft werden. Dann können geprüfte Abschnitte für Prozessgeschwindigkeit freigegeben werden. Auf diese Weise kann beispielsweise eine programmierte komplexe Bahn abschnittsweise abgefahren, geprüft und gegebenenfalls korrigiert werden, wobei bereits geprüfte Abschnitte bereits mit voller Prozessgeschwindigkeit durchfahren werden, d.h. für diese Abschnitte die Geschwindigkeitsbegrenzung abgewählt wird.

In einer bevorzugt Ausführung sind in der Fernzugriffsbetriebsart eine oder mehrere vorgegebene, insbesondere geteachte oder offline programmierte, Posen des Roboters manuell veränderbar. Aufgrund der in der erfindungsgemäßen Fernzugriffsbetriebsart durchgeführten Schutzüberwachung ist dies in einer bevorzugten Weiterbildung auch während des Ausführens von Arbeitsprogrammen mit voller Prozessgeschwindigkeit zugelassen. Als volle Prozessgeschwindigkeit wird vorliegend in fachüblicher Weise insbesondere eine Geschwindigkeit bezeichnet, mit der der Roboter ein Arbeitsprogramm im Automatikbetrieb ausführt, insbesondere eine vorgegebene Bahn abfährt.

Vorzugsweise ist die manuelle Änderung der Pose(n) nur innerhalb eines vorgegebenen Bereichs möglich, der beispielsweise durch einen Schlauch um die Trajektorie des Roboters in seinem Zustandsraum, eine Kugel um geteachte TCP-Positionen und/oder maximale Abweichungen von einzelnen Gelenkkoordinaten vorgegeben sein kann.

In einer bevorzugt Ausführung ist in der Fernzugriffsbetriebsart ein Arbeitsprogramm des Roboters veränder-, insbesondere editierbar. Vorzugsweise ist dies in gleicher Weise wie in der Einrichtbetriebsart möglich. Insbesondere kann ein Arbeitsprogramm, das in der Fernzugriffsbetriebsart verändert worden ist, automatisch markiert werden. Zusätzlich oder alternativ kann eine automatische Markierung erfolgen, wenn ein Arbeitsprogramm, überprüft, insbesondere ausgeführt, beispielsweise eine Bahn abgefahren wurde.

In einer bevorzugt Ausführung ist in der Fernzugriffsbetriebsart eine Steuerung des Roboters veränderbar. Insbesondere können eine Konfiguration und/oder Parameter verändert werden, beispielsweise eine Kinematik, Trägheits- und/oder Steifigkeitsparameter von Roboter und/oder Nutzlasten, Kontaktparameter, die einen Kontakt des Roboters mit der Umgebung beschreiben wie beispielsweise Reibwerte, Umgebungssteifigkeiten oder Randbedingungen, und dergleichen.

Vorzugsweise können in der Fernzugriffsbetriebsart ein oder mehrere Signalein-und/oder -ausgänge einer Steuerungskomponente manuell veränderbar werden. So können beispielsweise Ausgänge von Sensoren oder dergleichen manuell gesetzt werden, um so während der Fernzugriffsbetriebsart verschiedene Umgebungsrandbedingungen wie zum Beispiel das Vorhandensein von Werkstücken oder dergleichen zu simulieren.

Weitere Vorteile und Merkmale ergeben sich aus den Unteransprüchen und den Ausführungsbeispielen. Hierzu zeigt, teilweise schematisiert, die einzige:

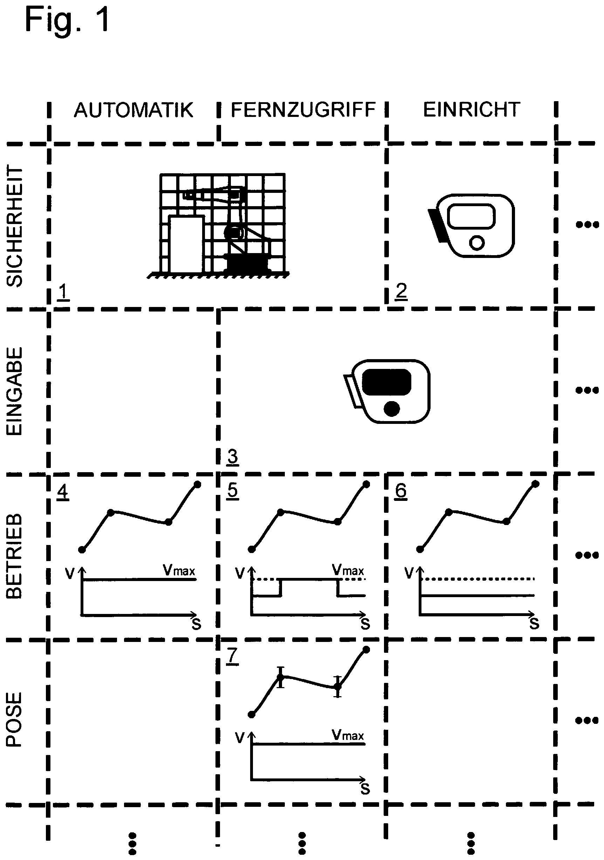

- Fig. 1:: verschiedene Betriebsarten einer Robotersteuerung nach einer Ausführung der vorliegenden Erfindung.

Fig. 1 zeigt in Tabellenform verschiedene Funktionalitäten in verschiedenen Betriebsarten einer Robotersteuerung nach einer Ausführung der vorliegenden Erfindung. Wie durch Punkte angedeutet, können gleichermaßen weitere Betriebsarten (entsprechend weiteren Spalten) und/oder weitere Funktionalitäten (entsprechend weiteren Zeilen) vorgesehen sein. Symbole, die in der Mitte zwischen zwei Spalten stehen, deuten an, dass dieselbe oder eine artgleiche Funktionalität in beiden Betriebsarten vorgesehen ist.

In der grundlegenden Automatikbetriebsart "AUTOMATIK" (linke Spalte der Fig. 1) wird eine Schutzüberwachung durchgeführt (erste Zeile "SICHERHEIT" der Fig. 1). Symbolisch ist hierzu ein Schutzzaun um den Arbeitsraum eines Industrieroboters mit einer Schutztür angedeutet, deren Verriegelung durch einen Schutzschalter überwacht wird. Ist der Schutzschalter und mithin die Schutztür geschlossen, kann der Roboter mit voller Prozessgeschwindigkeit v = Vₘₐₓ eine Bahn abfahren, die durch vier geteachte TCP-Positionen vorgegeben ist, welche in Fig. 1 durch Punkte angedeutet sind (dritte Zeile "BETRIEB" der Fig. 1).

In der ebenfalls an sich bekannten Einrichtbetriebsart "EINRICHT" (rechte Spalte der Fig. 1) wird an Stelle der Schutzüberwachung überwacht, ob eine Zustimmtaste an einem Handbediengerät betätigt ist. Ist die Zustimmtaste betätigt, was in Fig. 1 durch eine ausgefüllte Taste des schematisch dargestellten Handbediengeräts angedeutet ist, kann der Roboter mit reduzierter Geschwindigkeit v < vₘₐₓ manuell verfahren werden (dritte Zeile "BETRIEB" der Fig. 1).

In der mittleren Spalte "FERNZUGRIFF" ist eine erfindungsgemäße Fernzugriffsbetriebsart dargestellt. In dieser wird, wie vorstehend mit Bezug auf die Automatikbetriebsart beschrieben, eine Schutzüberwachung durchgeführt (erste Zeile "SICHERHEIT" der Fig. 1), indem die Verriegelung der Schutztür überwacht wird. Die Betätigung der Zustimmtaste wird hingegen nicht berücksichtigt.

Solange die Schutztür geschlossen ist, kann in der Fernzugriffsbetriebsart der Roboter manuell mit reduzierter Geschwindigkeit verfahren werden wie vorstehend mit Bezug auf die Einrichtbetriebsart beschrieben. Es kann auch programmgesteuert die geteachte Bahn des Roboters mit reduzierter Geschwindigkeit abgefahren werden. Wurde ein Abschnitt abgefahren und dabei überprüft, kann er als freigegeben markiert werden. Dann kann dieser Abschnitt mit voller Prozessgeschwindigkeit abgefahren werden, wie in der dritten Zeile "BETRIEB" der Fig. 1 schematisch angedeutet.

Zusätzlich ist es in der Fernzugriffsbetriebsart in gleicher Weise wie in der Einrichtbetriebsart möglich, ein Arbeitsprogramm zu editieren und/oder Konfiguration und /oder Parametrierung des Roboters zu verändern, wie in der zweiten Zeile "EINGABE" der Fig. 1 durch ausgefüllte Bedienelemente des Handbediengerätes angedeutet.

Insbesondere können in der Fernzugriffsbetriebsart, wie in der vierten Zeile "POSE" der Fig. 1 angedeutet, geteachte Punkte, die Posen des Roboters entsprechend, innerhalb eines vorgegebenen Bereichs, der in Fig. 1 schematisch angedeutet ist, auch während des automatischen Ausführens des Arbeitsprogramms mit voller Prozessgeschwindigkeit verändert werden, da durch die Schutzüberwachung (erste Zeile der Fig. 1) eine Gefährdung von Personen ausgeschlossen werden kann.

## Patentansprüche

1. Verfahren zum Steuern eines Roboters, wobei in einer Automatikbetriebsart ("AUTOMATIK") eine Schutzüberwachung (1) durchgeführt wird, in einer Einrichtbetriebsart ("EINRICHT"), die einen Betrieb des Roboters nur bei einer betätigten Zustimmeinrichtung (2) ermöglicht, eine manuelle Steuereingabe (3, 6) vorgesehen ist, und in einer Fernzugriffsbetriebsart ("FERNZUGRIFF") die Schutzüberwachung (1) durchgeführt wird und eine manuelle Steuereingabe (3, 5, 7) vorgesehen ist, **dadurch gekennzeichnet, dass** in der Fernzugriffsbetriebsart, in der ein manueller und/oder programmgesteuerter Betrieb des Roboters, insbesondere eine Geschwindigkeit (v), begrenzt wird (5), ein Betrieb des Roboters unabhängig von der Zustimmeinrichtung (2) erfolgt.

2. Verfahren nach Anspruch 1, **dadurch gekennzeichnet, dass** in der Fernzugriffsbetriebsart ein Betrieb des Roboters wahl- und/oder abschnittsweise begrenzt wird (5).

3. Verfahren nach einem der vorhergehenden Ansprüche, **dadurch gekennzeichnet, dass** in der Fernzugriffsbetriebsart eine Pose des Roboters manuell, insbesondere innerhalb eines vorgegebenen Bereichs, veränderbar ist (7).

4. Verfahren nach einem der vorhergehenden Ansprüche, **dadurch gekennzeichnet, dass** in der Fernzugriffsbetriebsart ein Arbeitsprogramm und/oder eine Steuerung des Roboters veränderbar ist (3).

5. Verfahren nach einem der vorhergehenden Ansprüche, **dadurch gekennzeichnet, dass** in der Fernzugriffsbetriebsart ein Signalausgang einer Steuerungskomponente manuell veränderbar ist (3).

6. Verfahren nach einem der vorhergehenden Ansprüche, **dadurch gekennzeichnet, dass** in der Fernzugriffsbetriebsart wenigstens eine Funktionalität (3, 6) der Einrichtbetriebsart vorgesehen ist.

7. Verfahren nach einem der vorhergehenden Ansprüche, **dadurch gekennzeichnet, dass** die Schutzüberwachung die Überwachung (1) eines Arbeitsraums des Roboters, insbesondere durch Überwachung wenigstens einer trennenden Schutzeinrichtung und/oder einer nicht trennenden Schutzeinrichtung umfasst.

8. Steuerung für einen Roboter, mit einer Eingabeeinrichtung zur Wahl einer Betriebsart, **dadurch gekennzeichnet, dass** die Steuerung zur Durchführung eines Verfahrens nach einem der vorhergehenden Ansprüche eingerichtet ist.

9. Computerprogrammprodukt mit einem darauf gespeicherten Programm, welches ein Verfahren nach einem der vorhergehenden Ansprüche 1 bis 7 ausführt, wenn es in eine Steuerung nach Anspruch 8 abläuft.

## Claims

1. A method of controlling a robot, wherein, in an automatic mode of operation ("AUTOMATIK"), protective monitoring (1) is carried out, in a set-up mode of operation ("EINRICHT"), which enables operation of the robot only when an enabling device (2) is actuated, a manual control input (3, 6) is enabled, and in a remote access mode of operation ("FERNZUGRIFF"), the protective monitoring (1) is carried out and a manual control input (3, 5, 7) is enabled, **characterised in that**, in the remote access mode of operation, in which a manual operation of the robot and / or a program-controlled operation of the robot, in particular a speed (v), is limited (5), an operation of the robot takes place independently of the enabling device (2).

2. The method according to claim 1, **characterised in that**, in the remote access mode of operation, an operation of the robot is limited in a selective manner and / or in sections (5).

3. The method according to any one of the preceding claims, **characterised in that**, in the remote access mode of operation, a pose of the robot can be changed manually, in particular within a predefined range (7).

4. The method according to any one of the preceding claims, **characterised in that**, in the remote access mode of operation, a work program and / or a control of the robot can be modified (3).

5. The method according to any one of the preceding claims, **characterised in that** a signal output of a control component can be manually changed in the remote access mode of operation (3).

6. The method according to any one of the preceding claims, **characterised in that** at least one functionality (3, 6) of the set-up mode of operation is enabled in the remote access mode of operation.

7. The method according to any one of the preceding claims, **characterised in that** the protection monitoring comprises the monitoring (1) of a working space of the robot, in particular by monitoring at least a separating protective device and / or a non-separating protective device.

8. A control system for a robot, wherein the control system comprises an input device for selecting a mode of operation, **characterised in that** the control system is set up for carrying out a method in accordance with any one of the preceding claims.

9. A computer program product having a program stored thereon which carries out a method in accordance with any one of the preceding claims 1 to 7 when it is run on a control system in accordance with claim 8.

## Revendications

1. Procédé de commande d'un robot, dans lequel dans un mode de fonctionnement automatique (« AUTOMATIK »), une surveillance de protection (1) est effectuée, dans un mode de fonctionnement de réglage (« EINRICHT »), qui permet un fonctionnement du robot uniquement lorsqu'un dispositif de consentement (2) est actionné, une entrée de commande manuelle (3, 6) est prévue, et dans un mode de fonctionnement d'accès à distance (« FERNZUGRIFF »), la surveillance de protection (1) est effectuée et une entrée de commande manuelle (3, 5, 7) est prévue, **caractérisé en ce que** dans le mode de fonctionnement d'accès à distance, dans lequel un fonctionnement manuel et/ou commandé par programme du robot, en particulier une vitesse (v), est limité (5), un fonctionnement du robot a lieu indépendamment du dispositif de consentement (2).

2. Procédé selon la revendication 1, **caractérisé en ce que** dans le mode de fonctionnement d'accès à distance, un fonctionnement du robot est limité sélectivement et/ou par tronçon (5).

3. Procédé selon l'une quelconque des revendications précédentes, **caractérisé en ce que** dans le mode de fonctionnement d'accès à distance, une pose du robot est modifiable manuellement, en particulier à l'intérieur d'une zone prédéfinie (7).

4. Procédé selon l'une quelconque des revendications précédentes, **caractérisé en ce que** dans le mode de fonctionnement d'accès à distance, un programme de travail et/ou une commande du robot est modifiable (3).

5. Procédé selon l'une quelconque des revendications précédentes, **caractérisé en ce que** dans le mode de fonctionnement d'accès à distance, une sortie de signal d'un composant de commande est modifiable manuellement (3).

6. Procédé selon l'une quelconque des revendications précédentes, **caractérisé en ce que** dans le mode de fonctionnement d'accès à distance, au moins une fonctionnalité (3, 6) du mode de fonctionnement de réglage est prévue.

7. Procédé selon l'une quelconque des revendications précédentes, **caractérisé en ce que** dans la surveillance de protection comprend la surveillance (1) d'un espace de travail du robot, en particulier par surveillance d'au moins un dispositif de protection de séparation et/ou d'un dispositif de protection de non-séparation.

8. Commande pour un robot, avec un dispositif d'entrée pour le choix d'un mode de fonctionnement, **caractérisée en ce que** la commande est aménagée pour la réalisation d'un procédé selon l'une quelconque des revendications précédentes.

9. Produit de programme informatique avec un programme enregistré dessus, lequel réalise un procédé selon l'une quelconque des revendications précédentes 1 à 7 lorsqu'il s'exécute dans une commande selon la revendication 8.
